# DEMANDE DE BREVET EUROPEEN

(11) **EP 3 414 998 A1**
(43) Date de publication de la demande: **19.12.2018**
(21) Numéro de dépôt: 18177897.8
(22) Date de dépôt: 15.06.2018
(51) Int. Cl.: A01J 25/11, A01J 25/13, A01J 25/16

(54) **BLOC MOULES À FROMAGES**

(30) Priorité: 15.06.2017 FR 1755392
(71) Demandeur: Secril, 01100 Martignat (FR)
(72) Inventeur: VACHER, Eric, 01430 Saint Martin du Fresne (FR)
(74) Mandataire: Cabinet Bleger-Rhein-Poupon

(57) **Abrégé**

Bloc moules (1) à fromages destiné à l'égouttage du lactosérum comprenant au moins un plateau (3) et une pluralité de moules (2) soudés et accolés les uns aux autres, ledit bloc moules étant parcouru par des couloirs d'évacuation (6) du lactosérum passant entre les moules, chacun desdits moules se présentant sous la forme d'un corps tubulaire (21) perforé reposant sur ledit plateau constituant le fond (22) desdits moules, ledit fond comprend au moins un store (7) ajouré sur l'intégralité de sa surface surmontant une paroi de récupération (8), et l'espace ménagé entre ledit store et la paroi de récupération communique avec lesdits couloirs d'évacuation, au travers d'ouvertures de drainage périphérique (91), caractérisé en ce que ladite paroi de récupération (8) présente, en surface, des gorges parallèles débouchant sur lesdites ouvertures de drainage périphérique (91).

## Description

La présente invention entre dans le domaine des blocs moules à fromages, destinés au caillage et à l'égouttage lors du processus de fabrication du fromage.

L'étape de caillage sert à la coagulation du lait sélectionné pour fabriquer le fromage, c'est-à-dire à la séparation du lactosérum et de la pâte donnant la base du fromage.

L'étape d'égouttage permet d'éliminer l'excès d'eau encore présent dans le caillé.

De manière générale, la fabrication du fromage comprend donc une opération d'égouttage du caillé, qui est réalisée dans un dispositif de moules qui consiste généralement en un corps creux comprenant des perforations pour permettre l'évacuation du lactosérum.

La demande française FR 2 956 562 se rapporte à un dispositif de blocs moules à plateaux, réversible, où chacun des blocs moules comporte plusieurs moules accolés. Chaque moule est de type corps tubulaire ajouré, et coopère avec un fond à surface rainurée, appelé store, que comporte ledit plateau, et qui présente en périphérie des ouvertures pour évacuer, au travers d'une gorge, le lactosérum.

Toutefois, ce dispositif de blocs moules ne présente pas entièrement satisfaction. En effet, l'égouttage ne se fait pas de manière uniforme sur toute la surface en contact avec le fromage, ce qui perturbe le processus de fabrication du fromage qui ne subira pas une maturation homogène.

En outre, comme ce dispositif de blocs moules, comme tous les blocs moules existants, est destiné à être superposé avec d'autres en une pile apte à être retournée pour le processus de l'égouttage du fromage, il convient de gérer l'évacuation du lactosérum avec précision, pour éviter qu'il ne tombe sur une partie du plateau inférieur et ne remouille le caillé, compromettant ainsi l'étape d'égouttage.

La présente invention a pour but de pallier les inconvénients de l'état de la technique, en proposant un bloc moules à fromages destiné à l'égouttage du lactosérum comprenant au moins un plateau et une pluralité de moules soudés et accolés les uns aux autres, ledit bloc moules étant parcouru par des couloirs d'évacuation du lactosérum passant entre les moules, chacun desdits moules se présentant sous la forme d'un corps tubulaire perforé reposant sur ledit plateau qui constitue le fond desdits moules.

De manière spécifique à l'invention, ledit fond comprend au moins un store qui est ajouré sur l'intégralité de sa surface et qui surmonte une paroi de récupération, tandis que l'espace ménagé entre ledit store et ladite paroi de récupération communique avec lesdits couloirs d'évacuation, au travers d'ouvertures de drainage périphérique.

Ainsi, le store ajouré sur l'intégralité de sa surface permet d'évacuer uniformément et de manière homogène le lactosérum vers la paroi pleine de récupération, sans risquer de remouiller les fromages présents sur les plateaux des étages inférieurs. De cette manière, le dispositif de blocs moules de l'invention permet d'avoir un processus de fabrication du fromage homogène. En particulier, les étapes de caillage et d'égouttage sont optimisées afin d'avoir des qualités organoleptiques et des extraits secs quasiment identiques pour tous les fromages fabriqués à l'aide du dispositif de l'invention.

Selon d'autres caractéristiques de l'invention :
- ladite paroi pleine de récupération présente en surface des gorges parallèles débouchant sur lesdites ouvertures de drainage périphérique;
- ledit bloc moules comporte une superposition de plusieurs plateaux munis d'une pluralité de moules.

Ainsi, le dispositif de l'invention peut présenter une série d'étages permettant de fabriquer le fromage en quantité industrielle. La conception du dispositif étant telle qu'il a la particularité d'être réversible. Ainsi, le retourner lors de l'étape de caillage et d'égouttage ne pose aucun problème quant à l'évacuation du lactosérum.

D'autres caractéristiques et avantages de l'invention ressortiront de la description détaillée qui va suivre des modes de réalisation non limitatifs de l'invention, en référence aux figures annexées, dans lesquelles :
- la figure 1 représente schématiquement une vue en plan d'un bloc moules à fromages de l'invention;
- la figure 2 représente schématiquement une vue en perspective d'une partie d'un bloc moules à fromages de l'invention;
- la figure 3 représente schématiquement une vue en perspective et en coupe selon un plan vertical d'un bloc moules à fromages de l'invention;
- la figure 4 représente schématiquement une vue partielle en élévation et en coupe d'un bloc moules à fromages de l'invention constitué d'une superposition de deux plateaux réversibles;
- la figure 5 représente schématiquement une vue de profil en coupe d'un bloc moules 1 à fromages de l'invention réversible et présentant deux doubles fonds.

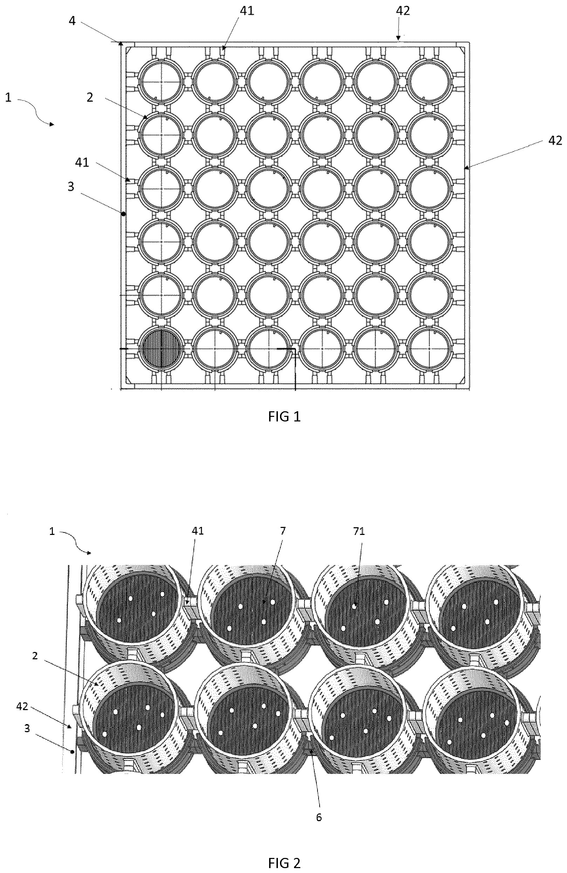

La présente invention concerne un bloc moules 1 à fromages tel que visible sur la figure 1.

Selon l'invention, ledit bloc moules 1 est destiné en outre à permettre le caillage et l'égouttage du lactosérum. Il est notamment conçu pour une fabrication industrielle du fromage.

Ledit bloc moules 1 comprend au moins un plateau 3 comprenant, d'une part, un cadre de maintien 4 entourant un ensemble de fonds 22 et, d'autre part, des corps creux tubulaires 21 destinés à être assemblés chacun à un fond 22 pour former le moule 2.

Selon un mode de réalisation particulier de l'invention, ledit bloc moules 1 à fromages comporte une superposition de plusieurs plateaux 3 munis chacun d'une pluralité de moules 2.

Chaque moule 2 présente un corps creux tubulaire 21 perforé reposant sur un fond 22 équipé d'un store 7 rapporté, ce dernier peut notamment être soudé par exemple par ultrason.

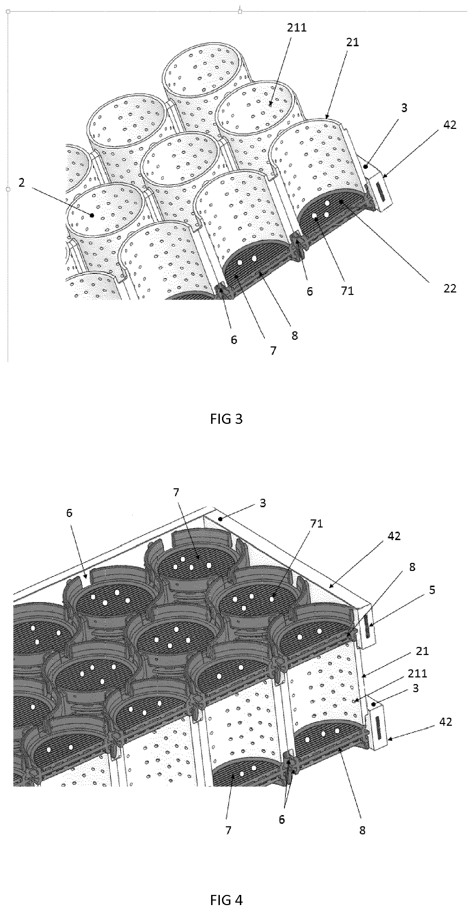

Par exemple, tel que visible sur la figure 3, ledit corps creux 21 d'un moule 2 présente des perforations circulaires 211 réparties uniformément, de sorte à permettre l'évacuation du lactosérum en dehors du moule 2.

Par exemple, tel que visible sur la figure 4, ledit bloc moules 1 comporte deux plateaux 3 superposés l'un sur l'autre, avec un bloc moules 1 emboité.

Selon l'invention, chaque plateau 3, comprenant la pluralité de moules 2, est entouré d'un cadre de maintien 4, ledit cadre 4 présentant une pluralité de traverses 41 parallèles qui s'étendent perpendiculairement entre deux longerons 42.

Plus spécifiquement, tel que visible sur la figure 1 et sur la figure 2, ledit cadre 4 est constitué de l'assemblage à angle droit ou arrondi de deux longerons parallèles 42 avec deux autres longerons parallèles 42, lesdits longerons 42 s'étendant dans un plan comprenant les traverses 41 supportant les fonds 22 de moules 2.

Dans la variante préférentielle du bloc moules 1 de l'invention où l'on superpose plusieurs plateaux 3 de dimension identique, tels que visibles sur la figure 4, on constate un empilement entre les moules 2 du plateau 3 supérieur et les moules 2 du plateau 3 inferieur, ainsi qu'un alignement vertical des traverses 41 et des longerons 42. De cette manière, les fonds 22 d'une pluralité de moules 2 d'un plateau 3 supérieur sont tête bêche et en vis-à-vis avec les fonds 22 d'une pluralité de moules 2 d'un plateau 3 inferieur, ceci de sorte à permettre une réversibilité du bloc moules 1.

Avantageusement, lesdites traverses 41 et/ou lesdits longerons 42 sont renforcés en interne par des inserts métalliques 5 tels que visibles sur la figure 4.

Ces inserts métalliques 5 permettent de rigidifier le cadre 4 et d'augmenter la résistance mécanique à la déformation du plateau 3. Ainsi, la manipulation du plateau 3 est aisée sans risque de casser le bloc moules 1, ceci même en cas de retournement. Le renforcement par les inserts métallique 5 du cadre 4 permet également d'augmenter les capacités de charge du plateau 3 pour supporter le poids des moules 2 remplis de caillé lors du processus de fabrication du fromage.

Ainsi, les inserts métalliques 5, en rigidifiant le cadre 4, permettent la réalisation de plateau 3 de grande dimension pour pouvoir être utilisable à échelle industrielle, chaque plateau 3 pouvant ainsi accueillir une pluralité de moules 2.

L'empilage peut se faire par le plateau 3 du bas présent en partie inférieure, ce qui simplifie la mécanisation, et augmente l'intérêt économique.

Au sein d'un même plateau 3, lesdits moules 2 sont soudés et accolés les uns aux autres, tels que visibles sur les figures 1 à 4.

Plus spécifiquement, et en vue de l'évacuation du lactosérum, ledit bloc moules 1 est parcouru par des couloirs d'évacuation 6 passant entre les moules 2, tels que visibles sur les figures 2 à 4.

Selon une particularité de l'invention, et en vue d'avoir un égouttage uniforme du fromage, ledit fond 22 du moule 2 à fromages est de type double fond.

Ainsi selon l'invention, ledit fond 22, sur lequel repose directement le corps tubulaire 21 accueillant le fromage, comprend au moins un store 7 ajouré sur l'intégralité de sa surface surmontant une paroi 8 de récupération du lactosérum.

Selon un mode privilégié de réalisation, ladite paroi 8 consiste en une paroi pleine.

Selon l'invention, ledit store 7 présente donc des orifices 71 répartis de manière homogène sur l'intégralité de sa surface.

Avantageusement, ledit store ajouré 7 présente une surface rainurée, de sorte à drainer facilement le lactosérum vers la paroi 8 de récupération.

Selon une autre caractéristique spécifique de l'invention, l'espace ménagé entre ledit store 7 et la paroi de récupération 8 communique avec lesdits couloirs d'évacuation 6, au travers d'ouvertures de drainage périphérique 91.

Selon un mode de réalisation particulier, l'espace ménagé entre ledit store 7 et la paroi de récupération 8 consiste en un anneau ou cloison périphérique 9. Cet anneau périphérique 9 délimite alors l'espace situé entre le store ajouré 7 et la paroi de récupération 8 qui est pleine, selon ce mode de réalisation. Ainsi, dans ce mode illustré sur les figures 2 à 5, l'anneau périphérique 9 présente des ouvertures de drainage périphérique 91 débouchant sur lesdits couloirs d'évacuation 6.

De cette manière, lors de l'égouttage, le lactosérum arrivant sur le fond 22 va s'écouler au travers des orifices 71 pour atteindre la paroi 8, puis il va s'évacuer au travers des ouvertures de drainage 91 vers lesdits couloirs d'évacuation 6.

Selon un mode de réalisation avantageux, afin de faciliter l'évacuation du lactosérum au travers des ouvertures de drainage 91 vers les couloirs d'évacuation 6, ladite paroi 8 peut présenter en surface des gorges parallèles débouchant sur lesdites ouvertures de drainage périphérique 91.

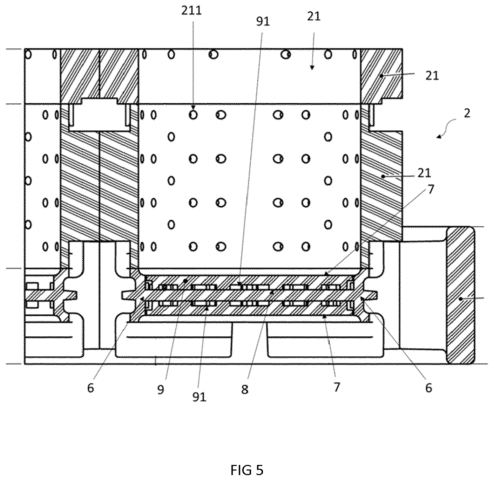

Selon un mode de réalisation privilégié visible en outre sur les figures 3 et 4, le bloc moules 1 à fromages de l'invention peut consister en un bloc moules 1 réversible comprenant une superposition de plateaux 3. Dans cette configuration, le fond 22 d'un moule 2 comprend, tels que visibles sur la figure 5, deux stores ajourés 7 qui se font face communiquant chacun avec une des deux faces d'une paroi de récupération 8 centrale. L'espace ménagé entre les stores ajourés 7 et l'une des deux faces de la paroi de récupération 8 centrale comprend des ouvertures de drainage 91 débouchant sur un même couloir d'évacuation 6. Dans cette configuration, le retournement du bloc moules 1 comprenant une superposition de plateaux 3 ne pose aucun risque de remouillage du caillé. L'égouttage reste uniforme dans le fond 22 du moule 2. L'opération d'égouttage est réalisée correctement et permet de conserver les qualités organoleptiques et d'assurer un extrait sec homogène du fromage que l'on souhaite fabriquer.

Ainsi, le bloc moules 1 de l'invention est de conception simple, tout en étant d'une efficacité remarquable pour l'opération de caillage et l'opération d'égouttage qui sera le plus homogène possible.

Avantageusement, ledit bloc moules 1 de l'invention permet un retournement de chacun des plateaux 3 individuellement, à l'unité ou encore de l'ensemble des plateaux 3 empilés, ceci en suivant les technologies de fabrication et les différentes étapes du procédé de fabrication du fromage.

En outre, ledit bloc moule 1, de par sa conception et par la possibilité d'emboitage des plateaux 3 et de la superposition des moules 2, permet une bonne aération verticale et longitudinale à travers les différents étages de plateaux 3. Cette aération génère une ventilation au sein du bloc moules 1 qui assure une meilleure homogénéité de la température entre l'intérieur et l'extérieur du bloc moules 1. Ainsi, l'homogénéité en température permet de générer des extraits secs de fromages plus régulier, une diminution des écarts type de poids, d'où un rendement supérieur par rapport au bloc moules de l'art antérieur comprenant un plateau plein classique équipé de stores d'égouttage.

## Revendications

1. Bloc moules (1) à fromages destiné à l'égouttage du lactosérum comprenant au moins un plateau (3) et une pluralité de moules (2) soudés et accolés les uns aux autres, ledit bloc moules (1) étant parcouru par des couloirs d'évacuation (6) du lactosérum passant entre les moules (2), chacun desdits moules (2) se présentant sous la forme d'un corps tubulaire (21) perforé reposant sur ledit plateau (3) constituant le fond (22) desdits moules (2), ledit fond (22) comprend au moins un store (7) ajouré sur l'intégralité de sa surface surmontant une paroi de récupération (8), et en ce que l'espace ménagé entre ledit store (7) et la paroi de récupération (8) communique avec lesdits couloirs d'évacuation (6), au travers d'ouvertures de drainage périphérique (91) **caractérisé en ce que** ladite paroi de récupération (8) présente, en surface, des gorges parallèles débouchant sur lesdites ouvertures de drainage périphérique (91) .

2. Bloc moules (1) à fromages selon la revendication précédente, **caractérisé en ce qu'**il comporte une superposition de plusieurs plateaux (3) munis d'une pluralité de moules (2).
